(19) Europäisches Patentamt
European Patent Office
Office européen des brevets

(11) EP 0 998 427 B1

(12) EUROPEAN PATENT SPECIFICATION

(45) Date of publication and mention of the grant of the patent:
**02.11.2005 Bulletin 2005/44**

(21) Application number: **97930636.2**

(22) Date of filing: **08.07.1997**

(51) Int Cl.[7]: **C01B 25/32**

(86) International application number:
**PCT/GB1997/001824**

(87) International publication number:
**WO 1999/002455 (21.01.1999 Gazette 1999/03)**

(54) **A METHOD FOR THE PRODUCTION OF A MONO-CALCIUM PHOSPHATE PRODUCT**

VERFAHREN ZUR HERSTELLUNG EINES MONOCALCIUMPHOSPHAT PRODUKTS

PROCEDE DE PRODUCTION D'UN PRODUIT AU PHOSPHATE MONOCALCIQUE

(84) Designated Contracting States:
**BE CH DE ES FR IE IT LI NL**

(43) Date of publication of application:
**10.05.2000 Bulletin 2000/19**

(73) Proprietor: **GLOBAL PHOSPHATES (Pty) Ltd**
**Christiana 2680 (SA)**

(72) Inventors:
- **WEIDEMAN, Werner, Jacobus**
  **Christiana 2680 (ZA)**
- **GROBBELAAR, Dani[l, Petrus**
  **Phalaborwa (ZA)**

(74) Representative: **Marshall, Monica Anne et al**
**J.A. KEMP & CO.**
**14 South Square**
**Gray's Inn**
**London WC1R 5LX (GB)**

(56) References cited:
**FR-A- 2 264 775**
**US-A- 2 135 475**
**US-A- 2 160 700**
**US-A- 2 462 104**
**US-A- 2 631 102**
**US-A- 3 467 495**

- **CHEMICAL ABSTRACTS, vol. 78, no. 22, 4 June 1973 Columbus, Ohio, US; abstract no. 138426, LECHUGA PANOS & AL.: "Monocalcium phosphate" XP002058874 & ES 381 027 A 16 June 1972**
- **CHEMICAL ABSTRACTS, vol. 78, no. 22, 4 June 1973 Columbus, Ohio, US; abstract no. 138427, LECHUGA PANOS & AL.: "Monocalcium phosphate" XP002058875 & ES 381 028 A 16 June 1972**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 998 427 B1

## Description

THIS INVENTION relates to a method for the production of a mono-calcium phosphate product. It also relates to an installation for the production of the mono-calcium phosphate product.

According to one aspect of the invention, there is provided a method for the production of a mono-calcium phosphate product, the method including the steps of

rapidly dispersing unslaked lime in an aqueous solution of phosphoric acid in a mixing zone to form a generally homogeneous reaction mixture and allowing reaction between the unslaked lime and the acid in the reaction mixture to proceed until the reaction mixture reaches a predetermined temperature;

rapidly transferring the reaction mixture to a reaction zone when it has reached the predetermined temperature;

allowing the reaction to proceed essentially to completion in the reaction zone to form the mono-calcium phosphate product; and

isolating the mono-calcium phosphate product formed.

Thus, the reaction proceeds partly in the mixing zone and partly in the reaction zone.

The aqueous phosphoric acid solution may have a concentration of about 45 - 48% ($P_2O_5$ equivalent) and preferably has a concentration of about 47% ($P_2O_5$ equivalent).

The phosphoric acid is typically ortho-phosphoric acid.

The method may include the prior step of admixing concentrated phosphoric acid with water in the mixing zone to produce the aqueous phosphoric acid solution.

By concentrated phosphoric acid is meant phosphoric acid having a concentration of about 55 - 62% ($P_2O_5$ equivalent) i.e. about 75 - 84% $H_3PO_4$. The volume of water admixed with the concentrated phosphoric acid in the mixing zone will thus be such as to produce an aqueous phosphoric acid solution having a concentration of about 45 - 48% ($P_2O_5$ equivalent) as described above. The reactivity of the unslaked lime, which is commercially available from different sources, can vary as is described in further detail below, and the concentration of the phosphoric acid may, accordingly, be adjusted, by routine experimentation, in accordance with the reactivity of the unslaked lime.

The sequence of mixing may be by adding the concentrated phosphoric acid to the water or vice versa or by adding the concentrated phosphoric acid and water simultaneously into the mixing zone. The concentrated phosphoric acid may contain about 0,04 - 0,10 % fluorine and will typically contain about 0,07 % fluorine.

By the term unslaked lime is meant CaO which is produced by heating $CaCO_3$. The reaction is represented by the equation $CaCO_3 + \text{heat} \rightarrow CaO + CO_2$ and requires temperatures in excess of 960°C.

The unslaked lime may contain about 85 - 95 % available CaO and preferably contains about 90 % available CaO i.e. about 64,3 % Ca. The total Ca, as CaO, may be about 90 - 95 % and is typically about 92,5 %. The size distribution of the lime may be such that about 10 % is retained on a 2,35 mm sieve.

Typically, the amount of unslaked lime and the amount of phosphoric acid used in.the dispersing step are selected to produce a mono-calcium phosphate (MCP) product having a total phosphorus content of not less than about 21 % (m/m), a total calcium content of not more than about 25 % (m/m) (typically 21 % P : 21 % Ca) and a moisture content of about 1 %. The product will thus consist largely of mono-calcium phosphate. The mono-calcium phosphate product of the invention complies with the South African officially registered specification for mono-calcium phosphate which is registered in terms of Republic of South Africa Act 36 of 1947.

The reaction between calcium oxide and phosphoric acid to produce mono-calcium phosphate is set out below:

$$CaO + 2H_3PO_4 \rightarrow Ca(H_2PO_4)_2 + \text{heat} + H_2O$$

It must be noted that the above equation only applies for MCP processes where..heat of reaction is allowed for all moisture to be driven off.

The amount of unslaked lime and the amount of aqueous phosphoric acid used in the dispersing step may be selected to produce a reaction mixture containing about 33 - 38 % unslaked lime and about 46 - 50 % $P_2O_5$ equivalent. Typically, the amounts will be selected to produce a reaction mixture containing about 35.6 % lime and about 48.8 % $P_2O_5$ equivalent.

The reaction between the lime and the aqueous phosphoric acid solution is exothermic and the temperature of a mixture of the lime and the aqueous phosphoric acid solution can rapidly rise to above 100°C. This has the following disadvantages. Above 100°C the reaction mixture begins to boil and extensive frothing occurs. The viscosity of the reaction mixture also increases substantially at and above 100°C. This results in an increased discharge time which lengthens the batch time. It also results in a layer of solidified product remaining in the mixing zone which reduces the rate of heat exchange between the reaction mixture and the walls of the mixing vessel. The product which remains behind in the mixing zone also reacts with the following batch of phosphoric acid.

Furthermore, if the rate of addition of the lime to the aqueous phosphoric acid solution is too low, the reaction mixture may reach boiling point before all the lime has been added. Also, if the reaction mixture is not efficiently mixed to disperse the lime in the aqueous phosphoric acid, so that the reaction mixture rapidly becomes homogeneous, local overheating which can reach almost explosive proportions, can take place.

It is thus important to disperse the lime in the aqueous phosphoric acid solution to bring about a homogeneous reaction mixture in the mixing zone as rapidly as possible, so that efficient reaction between the lime and the aqueous phosphoric acid can take place without localised overheating. In order to limit the extent of reaction which takes place in the mixing zone, and its attendant temperature increase, it is also important to transfer the homogeneous reaction mixture as rapidly as possible from the mixing zone to the reaction zone so that the reaction takes place largely in the reaction zone. Furthermore, in order to keep the batch cycle time as short as possible, the admixing, dispersing and transferring steps should be conducted as quickly as possible.

By batch cycle time is meant the pre-determined time between admixing the concentrated phosphoric acid and the water to produce the aqueous phosphoric acid solution and discharging the reaction mixture from the mixing zone. This time is selected, for a batch of a known mass, to ensure a pre-determined production rate.

Thus, in order to prevent substantial reaction from taking place in the mixing zone, with an associated temperature rise and frothing, before transfer of the reaction mixture to the reaction zone, the rate of dispersing of the lime in the aqueous phosphoric acid solution to produce a generally homogeneous reaction mixture will preferably be as high as possible, and the time during which reaction between the lime and the phosphoric acid proceeds in the mixing zone will be short enough to prevent the reaction mixture from reaching a temperature above about 90°C before the reaction mixture is transferred to the reaction zone. Preferably the reaction zone will be provided with a temperature monitoring device which is operable to trigger the transfer of the reaction mixture from the mixing zone to the reaction zone when the temperature in the zone reaches about 90°C.

The pre-determined temperature is from 85 to 95° C, and is preferably about 90° C.

The batch size may be 250 kg. By a 250 kg batch is meant a batch which contains sufficient lime and phosphoric acid to produce about 250 kg of mono-calcium phosphate.

To meet the above requirements for a 250 kg batch, the lime is added to the aqueous phosphoric acid solution in as short a time as practicable and generally over a period of less than 8 seconds, preferably about 4 - 8 seconds.

The admixture of the concentrated phosphoric acid and water is also an exothermic process Thus, in order to keep the batch time as short as possible, admixing the concentrated phosphoric acid and the water will preferably also be carried out as rapidly as possible. The admixing time will also be kept as short as possible so that the mixture can be allowed to cool for as long as possible before admixture with the lime.

To meet the above requirement, the water may be added to the concentrated phosphoric acid so that it is diluted from about 55-62% ($P_2O_5$ equivalent) to about 45-48% ($P_2O_5$ equivalent) in about 4-8 seconds. Thus, for a 250 kg batch, said concentrated phosphoric acid may be diluted with about 30-60 litres of water in about 4 - 8 seconds.

For a 250 kg batch, about 94 kg lime will typically be added to the phosphoric acid solution over a period of about 4 - 8 seconds, preferably about 4 seconds. The time during which reaction between the lime and the aqueous phosphoric acid solution takes place in the reaction mixture before the reaction mixture reaches about 90°C and is transferred to the reaction zone will, on this scale, be about 7 - 10 seconds. The transferring step will also be carried out as quickly as practicable, generally over about 5 - 8 seconds, and will typically be carried out over about 7 seconds. The above times do not change substantially if the batch size is either increased or decreased by about 20 %.

Thus, the dispersing step may be conducted over a period of about 4 - 10 seconds. The prior step of admixing concentrated phosphoric acid with water in the mixing zone may also be conducted over a period of about 4 - 8 seconds.

The transferring step may be conducted over a period of about 5 - 8 seconds.

The overall batch cycle time will thus be about 13 - 26 seconds.

The mixing zone will preferably have a volume which is about 8 - 16 times larger than the volume of the reaction mixture to allow an expansion volume for boiling and frothing of the reaction mixture, in the event of a too high temperature in the mixing zone, thereby to minimise potential losses.

Thus, the volume of the mixing zone may be 8 - 16 times longer than the volume of the reaction mixture.

The method may include cooling the mixing zone during the admixing and dispersing steps. The cooling may be by rapid agitation of the reaction mixture in the mixing zone to achieve rapid heat dispersion through the reaction mixture and by providing a heat exchanger which removes heat from the mixing zone.

The invention extends to a mono-calcium phosphate product whenever produced by the method as hereinabove described.

Naturally, a lime having a lower level of available CaO may be used in the method. Reaction times and temperatures will then be correspondingly longer and lower and routine experimentation may be conducted in order to determine the optimum times and temperatures necessary to produce mono-calcium phosphate.

According to another aspect of the invention, there is provided an installation for the production of a mono-calcium phosphate product, the installation including

a mixing zone and a separate reaction zone,

dispensing means arranged to dispense a predetermined quantity of phosphoric acid and a predetermined quantity of unslaked lime into the mixing zone to produce a mixture;

dispersing means for rapidly dispersing the unslaked lime in the aqueous phosphoric acid in the mixing zone to form a generally homogeneous reaction mixture; and

transferring means for rapidly transferring the reaction mixture from the mixing zone to the reaction zone when the reaction mixture has reached a predetermined temperature.

Typically, the dispensing means dispenses $H_3PO_4$ and CaO in the proportions required to produce a mono-calcium phosphate product .having a total phosphorus content of not less than 21 % (m/m) and a total calcium content of not more than about 25 % (m/m), eg 21 % P : 21 % Ca. As indicated above, to meet this specification, the reaction formulation contains about 35.6 % lime and sufficient phosphoric acid to provide about 48.8 % $P_2O_5$.

The dispensing means may be arranged to dispense, in addition, a predetermined quantity of water into the mixing zone.

The mixing zone may be provided with cooling means. The mixing zone may, for example, be a mixing vessel and the cooling means, may be in the form of a water jacket for cooling the reaction mixture. The cooling jacket will preferably be configured so as to provide the largest practicable cooling area for efficient heat removal.

The dispensing means may include hoppers from which, in use, the unslaked lime, the phosphoric acid and the water are dispensed into the mixing vessel. The dispersing means may be an agitator for dispersing the unslaked lime in the aqueous acid solution. Preferably, the agitator will be configured for rapid agitation to provide rapid heat dispersion as well as optimum heat exchange.

The dispensing means may be provided with load cells for measuring the mass of the unslaked lime, the phosphoric acid and the water in the dispensing means.

The reaction zone may be in the form of two or more reaction vessels such as static dens.

The installation may be provided with storage means for storing the unslaked lime and the phosphoric acid..

The mixing zone may comprise a mixing vessel fabricated from stainless steel having a wall thickness of about 1,5 - 2,5 mm to ensure rapid heat transfer through the walls of the mixing vessel. The mixing vessel will preferably be of cylindrical shape with a relatively large cross-sectional area and a relatively wide base so that the ratio of wall/floor surface area to reaction mixture volume is relatively large so that efficient heat transfer through the walls of the vessel can take place and so that expansion of the reaction mixture is allowed for if frothing occurs when a lime having a higher reactivity is used.

The transferring means may comprise at least one feed line which is provided with a valve for transferring the reaction mixture, under gravity, after the predetermined time, into the static dens.

The installation may be provided with automatic control means such as a process logic controller which operates to control all functions and to open the valve when the temperature in the mixing zone has reached a predetermined value, eg 90°C.

The invention also extends to a mono-calcium phosphate product whenever produced using the installation as hereinbefore described.

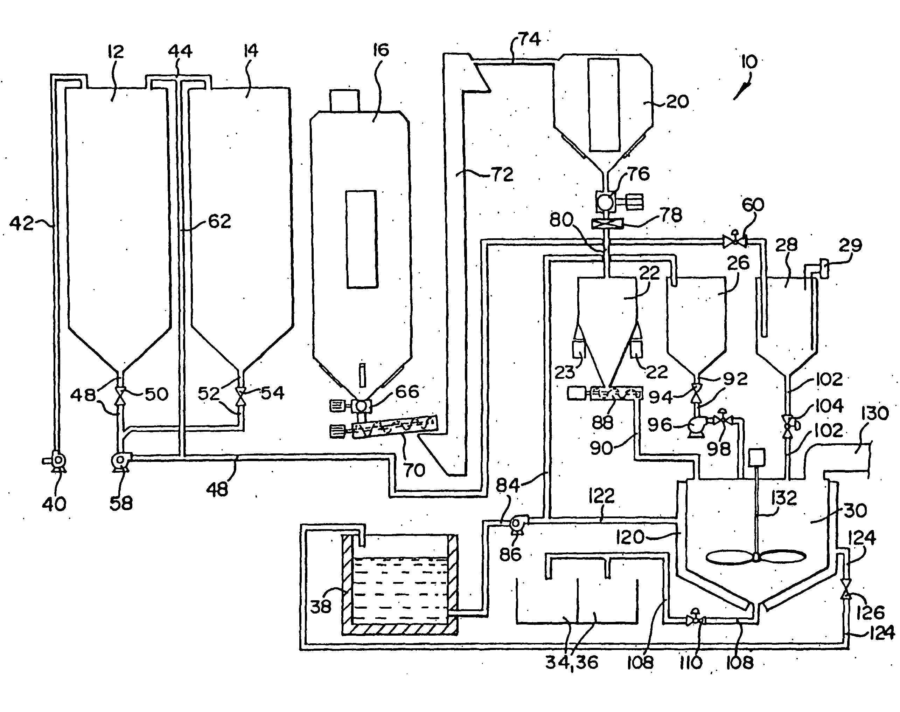

The invention will now be described, by way of example, with reference to the accompanying single figure which is a schematic representation of an installation for the production of mono-calcium phosphate in accordance with the invention, and to Table 1.

In the figure, reference numeral 10 generally indicates an installation for the production of a mono-calcium phosphate product. The installation 10 includes two 230m$^3$ concentrated phosphoric acid storage tanks 12, 14, a 230m$^3$ unslaked lime storage silo 16, a unslaked lime duty silo 20, unslaked lime, water and concentrated phosphoric acid hoppers 22, 26, 28, a mixing zone in the form of a vessel 30, two static dens 34, 36 and a water reservoir 38. The vessel 30 is a cylindrical mixing vessel of 1,5 - 1,6 m diameter with a conical bottom of about 24 cm deep.

An inlet feed flow line 42 leads from a feed pump 40 for feeding concentrated phosphoric acid into the phosphoric acid storage tank 12, and a connecting flow line 44 connects the tops of the storage tanks 12, 14. A phosphoric acid outlet flow line 48, which includes a valve 50, leads from the storage tank 12, and is linked to a second phosphoric acid outlet flow line 52, which includes a valve 54, leading from the storage tank 14. The outlet flow line 48 extends via a pump 58, located downstream of the line 52, to the phosphoric acid hopper 28, and is provided with a pneumatic valve 60. A flow line 62 connects the connecting flow line 44 between the tanks 12, 14 to the outlet flow line 48 downstream of the pump 58 and upstream of the valve 60.

The lime silo 16 is provided with a rotary valve feeder 66 for feeding lime into an auger 70 which transfers the lime to a bucket elevator 72 through which the lime is fed via a feed line 74 into the lime duty silo 20. A second rotary valve feeder 76 feeds the lime via a slide valve 78 and a feed line 80 into the lime hopper 22. The lime hopper 22 is mounted on load cells 23 so that the mass of lime in the hopper 72 can be measured. The lime hopper 22 is connected, via a second auger 88 and a feed line 90, to the reactor 30.

The water reservoir 38 is connected by a feed flow line 84 via a pump 86 to the water hopper 26. A flow line 92 leads from the water hopper 26 via a valve 94, a pump 96 and a pneumatic valve 98 to the mixing vessel 30. The water hopper 26 is also mounted on load cells (not shown) so that the mass of water in the hopper 26 can be measured.

A feed flow line 102 extends from-the phosphoric acid hopper 28 via a pneumatic valve 104 to the mixing vessel 30. The phosphoric acid hopper 28 is provided with a level probe device 29 for monitoring the level of phosphoric acid in the hopper 28. The hopper 28 is, optionally, also mounted on load cells (not shown) so that the mass of acid in the hopper can be measured.

A feed line 108 extends from the base of the mixing vessel 30 via a valve 110 to the static dens 34, 36. The mixing vessel 30 is provided with a water cooled jacket 120 which has a water inlet flow line 122 leading from the flow line 84 downstream of the pump 86 and a water outlet flow line 124 leading via a valve 126 to the water reservoir 38. The mixing vessel 30 is provided with a steam exhaust outlet 130 and an agitator 132.

In use, concentrated phosphoric acid having a concentration of about 55 - 62% ($P_2O_5$ equivalent) is fed from the storage tanks 12, 14 via the phosphoric acid outlet flow lines 48, 52 to the phosphoric acid hopper 28. Water is fed from the water reservoir 38 via the flow line 84 and the pump 86 into the water hopper 26, and lime is fed from the lime silo 16 via the auger 70, the bucket elevator 72, and the feed line 74 into the lime duty silo 20. The lime is then fed via the rotary valve feeder 76, the slide valve 78 and the feed line 80 into the lime hopper 20. The formulation mass balance is calculated to allow for variations in raw material quality, as discussed in more detail below. The accompanying Table 1 provides a $H_3PO_4/H_2O$ calculation sheet.

# TABLE 1

PRODUCT SPECIFICATION 21,3% P (48,8% $P_2O_5$)

CALCULATION OF $H_3PO_4$ BATCH SIZE PER TE MCP : 48,8 ÷ % $P_2O_5$ IN ACID x 100

| | 1 | 2 | 3 | 4 | 5 | 6 | 7 | 8 |
|---|---|---|---|---|---|---|---|---|
| | $H_3PO_4$ CONCENT | % SOLIDS | SOLIDS MASS kg | kg $H_3PO_4$ NEEDED | $H_2O$ IN ACID kg | ADDITIONAL $H_2O$ NEEDED | ADDITIONAL $H_2O$/BATCH | REMARKS |
| • → | 67% $P_2O_5$ | 7,0% | 51 | 728 | NIL | 288 | 72 | 93% $H_3PO_4$ (PURE ACID DILUTED BY 7%) |
| CONCENTRATED $H_3PO_4$ | 62% | 7,0% | 55 | 787 | 55 | 233 | 58 | FURTHER CALCULATIONS: |
| | 61% | 7,0% | 56 | 800 | 67 | 221 | 55 | A. SOLIDS MASS: kg $H_3PO_4$ X 0,07 |
| | 60% | 7,0% | 57 | 813 | 79 | 209 | 52 | B. $H_2O$ IN ACID: (kg $H_3PO_4$ - kg SOLIDS) - MINUS (728 - 51) |
| | 59% | 7,0% | 58 | 827 | 92 | 196 | 49 | C. ADDITIONAL $H_2O$ NEEDED: 288 - $H_2O$ IN ACID |
| | 58% | 7,0% | 59 | 841 | 105 | 183 | 46 | D. ADDITIONAL $H_2O$/BATCH ÷ 4 |
| | 57% | 7,0% | 60 | 856 | 119 | 169 | 42 | |
| | 56% | 7,0% | 61 | 871 | 133 | 155 | 39 | |
| | 55% | 7,0% | 62 | 887 | 148 | 140 | 35 | |
| | 54% | 7,0% | 63 | 903 | 163 | 125 | 31 | |
| • → | 47% | 7,0% | 73 | 1038 | 288 | ZERO | ZERO | AVERAGE IDEAL CONCENTRATION OF AQUEOUS SOLUTION $H_3PO_4$ |

COLUMN 1 IS CONCENTRATION OF $H_3PO_4$ IN % $P_2O_5$

COLUMN 2 IS PERCENTAGE IMPURITIES (SALTS OF Mg, Al, Si, Fe, Cu, etc.)

COLUMN 3 IS THE MASS (kg) IMPURITIES IN $H_3PO_4$ PER TE MCP

COLUMN 4 IS THE MASS OF $H_3PO_4$ NEEDED PER TE MCP

COLUMN 5 IS THE MASS OF $H_2O$ IN ACID AT GIVEN CONCENTRATION

COLUMN 6 IS ADDITIONAL $H_2O$ NEEDED PER TE MCP TO DILUTE TO 47% $P_2O_5$

COLUMN 7 IS ADDITIONAL $H_2O$ NEEDED PER 250 kg BATCH MCP

CALCULATIONS kg $H_3PO_4$/250 kg MCP : 48,8 ÷ % $P_2O_5$ IN ACID X 100 ÷ 4

In a typical batch run, sufficient phosphoric acid to provide 48.8 % $P_2O_5$ in the formulation after dilution is fed into the mixing vessel 30 and water (± 50 kg) is rapidly run into the mixing vessel 30 over a period of less than 8 seconds with vigorous stirring by the agitator 132 and with cooling water being pumped through the cooling jacket 120 at a rate of > 20 $m^3$/h. The resulting aqueous acidic solution, which is at a temperature of about 46 - 65 °C, is then agitated for 12 - 20 seconds during which time it cools to a temperature of about 30 - 45°C. Lime 94 kg is then fed via the auger 88, and the feed line 90, into the mixing vessel 30 with vigorous agitation by the agitator 132 over a period of less than 8 seconds to produce a homogeneous slurry and the resulting slurry is agitated for a further 7 - 9 seconds. The temperature of the reaction mixture rises to about 90°C during this period.

In other embodiments of the invention, in which less reactive lime is used, the slurry is discharged at temperatures lower than 90°C. Water flow to the cooling jacket 120 may be reduced or shut off to increase this temperature.

The increase of the temperature in the mixing vessel 30 to 90°C automatically triggers the discharge of the hot slurry from the mixing vessel via the feed line 108 and the valve 110 into the static dens 34, 36 over a period of about 8 seconds and it is left to react further in the static dens 34, 36. The temperature of the reacting slurry in the static dens rises to about 160 - 170°C over a period of about 40 minutes during which time most of the water present is driven off as steam. This temperature is also high enough to cause water of crystallisation of the mono-calcium phosphate to be driven off. The product, which is largely mono-calcium phosphate as described above, is then removed from the dens 34, 36 after about 40 minutes to a storage area where it is matured for 2 - 10 days before being packed.

The product mono-calcium phosphate product typically contains not less than 21% (m/m) total phosphorus, not more than 0,13 % (m/m) fluorine and not more than 25 % (m/m) calcium.

To ensure a total phosphorus content of at least 21 % (m/m), the relative amounts of lime and phosphoric acid are generally selected to target a phosphorus content of about 21,3 % (m/m). The mass balance is based on averaged analytical values to allow for variations in raw material quality. Furthermore, a loss of about 7 % is generally allowed for. To calculate the mass balance for the process, the average total water content of the monocalcium phosphate product is assumed to be 1 % (m/m).

Any formulation for the MCP product of the invention will depend on the physical quality of the two basic raw materials i.e. $H_3PO_4$ and CaO. The dry basis analysis of $H_3PO_4$ will be affected by the degree of dilution through the presence of impurities in the form of different salts and it may vary considerably. The CaO concentration in the unslaked lime may also vary considerably. A mass balance calculation is as follows:

A. Assume $H_3PO_4$ contains 7% impurities. Molecular mass of $H_3PO_4$ is 98.

$$\frac{31}{98} \times \frac{100}{1} = 31\%\ P \times 2{,}29 = 72{,}4\%\ P_2O_5$$

$$72{,}4 \times 0{,}93 = 67{,}3\%\ P_2O_5 \text{ in dry } H_3PO_4$$

Formulation target is 21,3% P (48,8% $P_2O_5$).
48,8 + 0,673 = 72, 5 parts dry $H_3PO_4$. Assume target is 1,0% free moisture in product: 72,5 + 1,0 = 73,5.
100 - 73,5 = 26,5 parts available for Ca - including impurities contained in lime.

B. Assume that lime averages around 90% total CaO (± 10% contaminants).
Molecular mass of CaO is 56.

$$\frac{40}{56} \times \frac{90}{100} + 10 = 74{,}3\%\ Ca + \text{impurities in } 90\%\ CaO.$$

$$\frac{40}{56} \times \frac{90}{100} = 64{,}3\%\ Ca \text{ in pure CaO.}$$

$$\frac{64{,}3}{74{,}3} \times \frac{100}{1} = 86{,}5\%\ Ca$$

26,5 parts x 0,865 = 22,9% Ca including impurities in lime. It should be noted that all the oxygen in the CaO is lost in the process.

A standard formulation is as follows:

A. 72,5 x 0,673 = 488 kg $P_2O_5$/Te MCP

B. 22,9 + 0,643 = 356 kg lime/Te MCP

Loss allowances based on practical experience can be built into the above mentioned standard formulation to provide a standard for costing purposes. It should be noted that although the standard of 488 kg $P_2O_5$ will remain constant, the lime is based on assumed values of impurities in the acid and the lime.

The total P content of the MCP product of the invention is derived from the total P value attainable when a stoichiometrically balanced MCP is manufactured using the best raw materials available locally:

Stoichiometrically balanced MCP

1. $CaO + H_2O \rightarrow Ca(HO)_2$
2. $Ca(HO)_2 + 2H_3PO_4 \rightarrow Ca(H_2PO_4)_2.2H_2O$

Molecular mass of $Ca(H_2PO_4)_2.2H_2O$ is 270

$$\frac{40}{270} \times \frac{100}{1} = 14{,}8\% \text{ Ca}$$

$$\frac{62}{270} \times \frac{100}{1} = 22{,}96\% \text{ P}$$

22,96% P diluted by ± 7% impurities = 21,35% P in a stoichiometrically balanced MCP where provision is made for inclusion of impurities in raw materials.

The volume of water used for $H_2PO_4$ dilution must be guided by the final cake temperature in the static dens 34,36 in order to control water soluble P in the MCP product of the invention. Without being bound by theory, the Applicant believes that the following reactions are taking place simultaneously in the process of the invention:

1. $CaO + H_2O \rightarrow Ca(HO)_2$ (slaked lime) + HEAT
2. $Ca(HO)_2 + 2H_3PO_4 \rightarrow 2Ca(H_2PO_4)_2.2H_2O$ (M.C.P. dihydrate) + HEAT
3. $Ca(H_2PO_4)_2.2H_2O + CaO \rightarrow 2CaHPO_4.H_2O$ (dicalcium phosphate) + HEAT + $H_2O$
4. $2CaHPO_4.H_2O + CaO \rightarrow Ca_3(PO_4)_2$ (tricalcium phosphate) + HEAT + $H_2O$

also

5. $CaO + 2H_3PO_4 \rightarrow Ca(H_2PO_4)_2.H_2O$ (M.C.P. monohydrate)

The progressive reaction phases from 1-4 require increasingly higher temperatures to support the reaction in each step. Thus, the progression from M.C.P to D.C.P (dicalcium phosphate) to T.C.P (tricalcium phosphate) is dependent on the reaction temperature reached in the reaction zone (static dens), as well as the amount of Ca available. Excess water in the formulation allows for the loss of large quantities of latent energy through the emission of steam from the reactive mass in the reaction zone. The use of more water will result in the loss of more energy, thus preventing excessively high final cake temperature. The ideal is to use maximum water in the formulation, which is limited by the free moisture content of product not exceeding 2,0 % ex. static dens. Thus, the final cake temperature in the reaction zone is dependent on the amount of water in the formulation. It can also be seen that the maximum mono-calcium phosphate (which is water-soluble) will be formed at the minimum temperature attainable in the static dens.

It is an advantage of the invention illustrated that the production rate is higher than is the case with installations for the production of mono-calcium phosphate known to the Applicant. The installation of the invention is capable of producing about 20 Te of mono-calcium phosphate, with the product specifications given above, per hour. The Applicant envisages that this rate may be increased to about 30 Te per hour, or more, if a larger reactor and additional static dens are used. It is also an advantage of the invention illustrated that the process is relatively safe, and does not expose workers to substantial health risks. The process also does not create a substantial risk of environmental pollution. The equipment and the materials used in the process are of standard construction unlike the case in the production of monocalcium phosphate from $CaCO_3$ and sophisticated equipment, materials and skills are not required. The process is also not as energy-intensive as the $CaCO_3$ process. It is also an advantage of the invention illustrated that both control of the process and the maintenance of the equipment require a relatively low level of skill.and process problems can generally usually be easily diagonised and addressed. Furthermore, because of the standard nature of the equipment, the cost of maintenance of the equipment and capital expenditure in order to set up the .installation are, accordingly, relatively low. It is a further advantage of the invention illustrated that, although relatively standard equipment is used, raw material proportioning can be accurately effected.

## Claims

1. A method for the production of a mono-calcium phosphate product, the method including the steps of
dispersing unslaked lime in an aqueous solution of phosphoric acid in a mixing zone to form a generally homogenous reaction mixture and allowing reaction between the unslaked lime and the acid in the reaction mixture to proceed until the reaction mixture reaches a temperature of from 85 to 95 °C;
transferring the reaction mixture to a reaction zone;
allowing the reaction to proceed essentially to completion in the reaction zone to form the mono-calcium phosphate product; and
isolating the mono-calcium phosphate product formed.

2. A method as claimed in claim 1, in which the aqueous phosphoric acid solution has a concentration of from 45 to 48% ($P_2O_5$ equivalent).

3. A method as claimed in claim 1 or 2, in which the phosphoric acid is ortho-phosphoric acid.

4. A method as claimed in any one of the preceding claims, which includes the prior step of admixing concentrated phosphoric acid with water in the mixing zone to produce the aqueous phosphoric acid solution.

5. A method as claimed in claim 1, **characterised in that** the unslaked lime contains from 85 to 95% available CaO.

6. A method as claimed in claim 1 or 5, **characterised in that** the size distribution of the unslaked lime is such that about 10% is retained on a 2.35 mm sieve.

7. A method as claimed in claim 1 or 2, **characterised in that** the amount of unslaked lime and the amount of aqueous phosphoric acid used in the dispersing step are selected to produce a mono-calcium phosphate product having a total phosphorus content of not less than 21% (m/m), a total calcium content of not more than 25% (m/m) and a moisture content of 1%.

8. A method as claimed in claim 1 or 2, **characterised in that** the amount of unslaked lime and the amount of aqueous phosphoric acid used in the dispersing step are selected to produce a reaction mixture containing from 33 to 38% lime and from 46 to 50% $P_2O_5$ equivalent.

9. A method as claimed in claim 1 or 2, **characterised in that** the dispersing step is conducted over a period of from 4 to 10 seconds.

10. A method as claimed in claim 4, **characterised in that** the prior step of admixing concentrated phosphoric acid with water in the mixing zone is conducted over a period of from 4 to 8 seconds.

11. A method as claimed in claim 1 or 2, **characterised in that** the transferring step is conducted over a period of from 5 to 8 seconds.

12. A method as claimed in claim 1 or 2, **characterised in that** the volume of the mixing zone is from 8 to 16 times larger than the volume of the reaction mixture.

13. A method as claimed in claim 1 or 2, **characterised in that** it includes cooling the mixing zone.

## Patentansprüche

1. Verfahren zur Herstellung eines Monocalciumphosphat-Prodults, wobei das Verfahren die Schritte aufweist
Dispergieren ungelöschten Kalks in einer wässrigen Lösung von Phosphorsäure in einer Mischzone, um ein im allgemeinen homogenes Reaktions-Gemisch zu bilden, und Gestatten einer Reaktion zwischen dem ungelöschten Kalk und der Säure in dem Reaktions-Gemisch, bis das Reaktions-Gemisch eine Temperatur zwischen 85° und 95°C erreicht;
Überführen des Reaktions-Gemisches zu einer Reaktionszone;
es der Reaktion zu gestatten, im Wesentlichen soweit fortzuschreiten, dass diese in der Reaktionszone beendet wird, um das Monocalciumphosphat-Produkt zu bilden; und

Isolieren des gebildeten Monocalciumphosphat-Produkts.

**2.** Verfahren nach Anspruch 1, in welchem die wässrige Phosphorsäure-Lösung eine Konzentration von 45 bis 48 % ($P_2O_5$-Äquivalent) aufweist.

**3.** Verfahren nach Anspruch 1 oder 2, in welchem die Phosphorsäure eine Orthophosphorsäure ist.

**4.** Verfahren nach einem der vorherigen Ansprüche, welches den vorherigen Schritt des Vermischens konzentrierter Phosphorsäure mit Wasser in der Mischzone umfasst, um die wässrige Phosphorsäure-Lösung zu erzeugen.

**5.** Verfahren nach Anspruch 1, **dadurch gekennzeichnet, dass** der ungelöschte Kalk 85 bis 95% verfügbares CaO enthält.

**6.** Verfahren nach Anspruch 1 oder 5, **dadurch gekennzeichnet, dass** die Größen-Verteilung des ungelöschten Kalks derart ist, dass ungefähr 10% auf einem 2,35 Millimeter-Sieb zurückgehalten werden.

**7.** Verfahren nach Anspruch 1 oder 2, **dadurch gekennzeichnet, dass** die Menge ungelöschten Kalks und die Menge wässriger Phosphorsäure, die in dem Dispergier-Schritt verwendet werden, gewählt sind, um ein Monocalciunaphosphat-Produkt zu bilden, das einen Gesamt-PhosphorGehalt von nicht weniger als 21% (m/m), einen Gesamt-CalciumGehalt von nicht mehr als 25% (m/m) und einen Feuchtigkeits-Gehalt von 1% aufweist.

**8.** Verfahren nach Anspruch 1 oder 2, **dadurch gekennzeichnet, dass** die Menge ungelöschten Kalks und die Menge wässriger Phosphorsäure, die in dem Dispergier-Schritt verwendet werden, gewählt sind, um ein Reaktions-Gemisch zu bilden, das 33 bis 38% Kalk und 46 bis 50% $P_2O_5$-Äquivalent aufweist.

**9.** Verfahren nach Anspruch 1 oder 2, **dadurch gekennzeichnet, dass** der Dispergier-Schritt über eine Dauer von 4 bis 10 Sekunden ausgeführt wird.

**10.** Verfahren nach Anspruch 4, **dadurch gekennzeichnet, dass** der vorherige Schritt des Vermischens konzentrierter Phosphorsäure mit Wasser in der Mischzone über eine Dauer von 4 bis 8 Sekunden ausgeführt wird.

**11.** Verfahren nach Anspruch 1 oder 2, **dadurch gekennzeichnet dass** der Überführungs-Schritt über eine Dauer von 5 bis 8 Sekunden ausgeführt wird.

**12.** Verfahren nach Anspruch 1 oder 2, **dadurch gekennzeichnet, dass** das Volumen der Mischzone 8 bis 16 mal größer als das Volumen des Reaktions-Gemischs ist.

**13.** Verfahren nach Anspruch 1 oder 2, **dadurch gekennzeichnet, dass** dieses das Kühlen der Mischzone umfasst.

## Revendications

**1.** Procédé de production d'un produit de phosphate mono-calcique, ce procédé comprenant les étapes de :

- dispersion de chaux vive dans une solution aqueuse d'acide phosphorique dans une zone de mélange pour former un mélange réactionnel généralement homogène puis développement de la réaction entre la chaux vive et l'acide dans le mélange réactionnel jusqu'à ce que le mélange réactionnel atteigne une température de 85 à 95 °C ;
- transfert du mélange réactionnel dans une zone réactionnelle ;
- réalisation de la réaction jusqu'à pratiquement son achèvement dans la zone réactionnelle pour former le produit de phosphate mono-calcique ; et
- isolement du produit de phosphate mono-calcique formé.

**2.** Un procédé selon la revendication 1, dans lequel la solution aqueuse d'acide phosphorique présente une concentration allant de 45 à 48 % (équivalent $P_2O_5$).

**3.** Un procédé selon la revendication 1 ou 2, dans laquelle l'acide phosphorique est l'acide ortho-phosphorique.

4. Un procédé selon l'une quelconque des revendications précédentes, qui comprend l'étape préalable d'admission d'acide phosphorique concentré dans de l'eau dans la zone de mélange pour produire la solution aqueuse d'acide phosphorique.

5. Un procédé selon la revendication 1, **caractérisé en ce que** la chaux vive contient de 85 à 95 % de CaO disponible.

6. Un procédé selon la revendication 1 ou 5, **caractérisé en ce que** la distribution en taille de la chaux vive est telle qu'environ 10 % sont retenus sur un tamis de 2,35 mm.

7. Un procédé selon la revendication 1 ou 2, **caractérisé en ce que** la quantité de chaux vive et la quantité d'acide phosphorique en solution aqueuse utilisées dans l'étape de dispersion sont choisies pour produire un produit de phosphate mono-calcique présentant une teneur en phosphore totale non inférieure à 21 % (m/m), une teneur en calcium totale non supérieure à 25 % (m/m) et une teneur en humidité de 1 %.

8. Un procédé selon la revendication 1 ou 2, **caractérisé en ce que** la quantité de chaux vive et la quantité d'acide phosphorique en solution aqueuse utilisées dans l'étape de dispersion sont choisies pour produire un mélange réactionnel contenant de 33 à 38 % de chaux et de 46 à 50 % d'équivalent $P_2O_5$.

9. Un procédé selon la revendication 1 ou 2, **caractérisé en ce que** l'étape de dispersion est effectuée pendant une période de 4 à 10 secondes.

10. Un procédé selon la revendication 4, **caractérisé en ce que** l'étape préalable d'admission d'acide phosphorique concentré dans l'eau dans la zone de mélange est effectuée pendant une période de 4 à 8 secondes.

11. Un procédé selon la revendication 1 ou 2, **caractérisé en ce que** l'étape de transfert est effectuée pendant une période de 5 à 8 secondes.

12. Un procédé selon la revendication 1 ou 2, **caractérisé en ce que** le volume de la zone de mélange est de l'ordre de 8 à 16 fois supérieur au volume du mélange réactionnel.

13. Un procédé selon la revendication 1 ou 2, **caractérisé en ce qu'**il comprend le refroidissement de la zone de mélange.

10
12
14
16
20
22
22
23
26
28
29
30
34,36
38
40
42
44
48
48
50
52
54
58
60
62
66
70
72
74
76
78
80
84
86
88
90
92
94
96
98
102
104
102
108
108
110
120
122
124
124
126
130
132